# EUROPÄISCHE PATENTSCHRIFT

(11) **EP 2 145 169 B1**
(45) Veröffentlichungstag und Bekanntmachung des Hinweises auf die Patenterteilung: **10.11.2010**
(21) Anmeldenummer: 08749925.7
(22) Anmeldetag: 30.04.2008
(51) Int. Cl.: G01M 7/08, G01M 19/00

(54) **VORRICHTUNG UND VERFAHREN ZUR PRÜFUNG EINES KRAFTFAHRZEUGSITZES**
DEVICE AND METHOD FOR TESTING A MOTOR VEHICLE SEAT
DISPOSITIF ET PROCEDE DE CONTROLE D'UN SIEGE DE VEHICULE AUTOMOBILE

(30) Priorität: 04.05.2007 DE 102007022359; 25.06.2007 DE 102007029783
(43) Veröffentlichungstag der Anmeldung: 20.01.2010
(73) Patentinhaber: Takata-Petri AG, 63743 Aschaffenburg (DE)
(72) Erfinder: FECHNER, Tobias, 63881 Stockstadt Am Main (DE); KNAPPE, Christoph, 13158 Berlin (DE)
(74) Vertreter: Baumgärtel, Gunnar
(86) Internationale Anmeldenummer: PCT/EP2008/055342
(87) Internationale Veröffentlichungsnummer: WO 2008/135497

(56) Entgegenhaltungen:
- DE-A1- 10 107 016
- DE-A1- 19 908 739
- DE-C1- 19 923 190
- US-A- 3 841 163
- US-A1- 2005 204 800

## Beschreibung

Die Erfindung betrifft eine Vorrichtung zur Prüfung eines Kraftfahrzeugsitzes unter der Wirkung bei Bewegungsänderungen eines Kraftfahrzeugs auftretender (externer) Belastungen nach dem Oberbegriff des Anspruchs 1 sowie ein Verfahren zur Durchführung einer solchen Prüfung nach dem Oberbegriff des Anspruchs 12.

Eine gattungsgemäße Vorrichtung zur Prüfung eines Kraftfahrzeugsitzes umfasst ein entlang einer (geradlinigen oder gekrümmt verlaufenden) Prüfstrecke verfahrbares Versuchsgrundgestell, bezüglich dem der zu prüfende Kraftfahrzeugsitz fest zu installieren ist, sowie einen Prüfkörper zur Belastung des Fahrzeugsitzes bei Bewegungsänderungen des Versuchsgrundgestells, d. h., bei einer (positiven oder negativen) Beschleunigung des Versuchsgrundgestells, die beispielsweise durch eine Kollision des Versuchsgrundgestells mit einem Kollisionsobjekt hervorgerufen sein kann.

Der Prüfkörper simuliert dabei einen auf dem Kraftfahrzeugsitz sitzenden Fahrzeuginsassen bzw. die für eine jeweilige Prüfung des Kraftfahrzeugsitzes relevanten Körperteile eines Fahrzeuginsassen, wie z. B. dessen Beckenbereich oder dessen Rücken.

Zur Prüfung eines Fahrzeugsitzes mit einer derartigen Vorrichtung wird das verfahrbare Versuchsgrundgestell entlang einer Prüfstrecke beschleunigt und ggf. wieder abgebremst, so dass eine positive und ggf. eine negative Beschleunigung des Versuchsgrundgestells vorliegt, und hierbei das Verhalten des dem Fahrzeugsitz zugeordneten Prüfkörpers untersucht. Hieraus lassen sich Rückschlüsse auf Eigenschaften des Fahrzeugsitzes ziehen, die den Fahrzeugsitz beim Auftreten größerer Belastungen, hervorgerufen durch Beschleunigung und/oder Abbremsung des Sitzes und des zugeordneten Prüfkörpers, charakterisieren, insbesondere auf Materialeigenschaften des Sitzes. Hierdurch lässt sich wiederum ermitteln, wie ein tatsächlicher Fahrzeugsitz beim Auftreten beschleunigungsbedingter Belastungen unter Berücksichtigung des konkreten Aufbaus des Sitzgestells, unter Berücksichtigung zueinander verstellbarer Sitzkomponenten, wie z. B. einer schwenkbar an einem Sitzuntergestell angelenkten Rückenlehne, sowie unter Berücksichtigung der Deformierbarkeit des Sitz-, Lehnen- und Kopfstützenpolsters, reagiert, etwa im Unterschied zu einem fiktiven starren Fahrzeugsitz.

Solche Eigenschaften eines Fahrzeugsitzes sind wiederum von Bedeutung, um Sicherheitssysteme eines Kraftfahrzeugs, wie z. B. Sicherheitsgurte und Airbags oder allgemein so genannte Rückhaltesysteme, so auszulegen, dass der Schutz eines auf dem Fahrzeugsitz sitzenden Insassen optimiert wird. Denn bei der Auslegung der genannten Rückhaltesysteme kann es selbstverständlich von Bedeutung sein, inwieweit in einem Kollisionsfall, der regelmäßig mit einer starken (negativen oder positiven) Beschleunigung eines Kraftfahrzeugs (je nach dem, ob es sich z.B. um einen Front- oder Heckaufprall handelt) einhergeht, einzelne Sitzkomponenten verformt sowie relativ zueinander bewegt werden.

Die bei einer Prüfung des Kraftfahrzeugsitzes ermittelten charakteristischen Eigenschaften, die einen tatsächlichen Kraftfahrzeugsitz von einem fiktiven, starren Kraftfahrzeugsitz unterscheiden und die insbesondere auf die Eigenschaften der für den Kraftfahrzeugsitz verwandten Materialien zurückgehen, können etwa in Modellen für Computersimulationen verwendet werden, um Sicherheitssysteme eines Kraftfahrzeugs u.a. in Abhängigkeit von charakteristischen Eigenschaften der Fahrzeugsitze des betreffenden Kraftfahrzeugs zu gestalten.

Aus der DE 199 23 190 C1 ist ein Verfahren zum Prüfen des Seitenhaltes von Fahrzeugsitzen für eine auf dem Fahrzeugsitz platzierten Sitzbenutzer bekannt.

Aus den Druckschriften DE 199 08 739 A1 und DE 101 07 016 A1 sind Vorrichtungen zur Prüfung von Kraftfahrzeugteilen unter der Wirkung externer Belastungen bekannt, bei denen ein Prüfkörper zur Belastung des Kraftfahrzeugteils auf einem entlang einer Prüfstrecke verfahrbaren Versuchsgrundgestell festgelegt ist.

Der Erfindung liegt das Problem zugrunde, eine Vorrichtung und ein Verfahren der eingangs genannten Art im Hinblick auf die Ermittlung charakteristischer Eigenschaften, insbesondere Materialeigenschaften, eines Kraftfahrzeugsitzes weiter zu verbessern.

Hinsichtlich der Vorrichtung wird dieses Problem durch die Merkmale des Anspruchs 1 gelöst.

Danach ist der Prüfkörper derart relativ zum Fahrzeugsitz beweglich und schwenkbar am Versuchsgrundgestell geführt, dass er einerseits gemeinsam mit dem Versuchsgrundgestell entlang einer Prüfstrecke verfahrbar ist und andererseits bei Bewegungsänderungen des Versuchsgrundgestells, also einer (positiven oder negativen) Beschleunigung des Versuchsgrundgestells, relativ zu dem (bestimmungsgemäß am Versuchsgrundgestell angeordneten) Fahrzeugsitz bewegbar ist und hierdurch den Fahrzeugsitz belastende Kräfte ausüben kann, die die Einwirkung eines Fahrzeuginsassen auf den entsprechenden Fahrzeugsitz beim Auftreten starker (positiver oder negativer) Fahrzeugbeschleunigungen, insbesondere in einem Crash-Fall, simulieren sollen. Zur längsbeweglichen Führung des Prüfkörpers am Versuchsgrundgestell sind mehrere (geradlinige oder gekrümmte) längserstreckte Führungsschienen vorgesehen, in die jeweils ein zugeordnetes Führungselement längsverschieblich eingreift.

Um die Folgen eines Frontalaufpralls simulieren zu können, bei dem sich ein Fahrzeuginsasse relativ zu dem zugeordneten Fahrzeugsitz insbesondere entlang der Fahrzeuglängsachse (welche sich in Vorwärtsfahrtrichtung eines Kraftfahrzeugs erstreckt) bewegt, erstrecken sich die Führungsschienen, mittels der der Prüfkörper geführt ist - bezogen auf den bestimmungsgemäß in ein Kraftfahrzeug eingebauten Zustand des Sitzes - entlang jener Fahrzeuglängsachse. Hierdurch lässt sich insbesondere die Belastung eines am Versuchsgrundgestell installierten Kraftfahrzeugsitzes in solchen Situationen ermitteln und untersuchen, in denen der Prüfkörper entlang der Fahrzeuglängsachse relativ zu dem Sitz bewegt wird.

Unabhängig davon, ob die Belastung eines Fahrzeugsitzes durch einen Frontalaufprall oder einen Schrägaufprall hervorgerufen wird, tritt regelmäßig auch eine Relativbewegung eines jeweiligen Fahrzeuginsassen bezüglich seines Sitzes mit einer Komponente entlang der vertikalen Fahrzeugachse auf, was durch eine derart geneigte Anordnung der Führungsschienen bezüglich der Fahrzeuglängsachse berücksichtigt wird, dass die von den Führungsschienen definierte Führungsbahn aufgrund der Neigung der Führungsschiene bezüglich der Fahrzeuglängsachse eine Komponente entlang der vertikalen Fahrzeugachse aufweist.

Bei einer geneigten Anordnung jener Führungsschienen bezüglich der Fahrzeuglängsachse kann vorgesehen sein, dass die von der mittleren Führungsschiene definierte Führungsbahn eine kleinere Komponente entlang der vertikalen Fahrzeugachse aufweist als die von den äußeren Führungsschienen definierten Führungsbahnen. Durch eine Führung des Prüfkörpers mittels mehrerer Führungsschienen, von denen einige eine unterschiedliche Neigung aufweisen, lassen sich Überlagerungen einer Längsbewegung und einer Schwenkbewegung des Prüfkörpers erzeugen, so dass der Prüfkörper eine Kippbewegung, zum Beispiel nach hinten, ausführt.

Zur Erzeugung einer Kombination aus einer Längs- und einer Schwenkbewegung des Prüfkörpers ist vorgesehen, dass mindestens eine Führungsschiene und/oder das hieran angreifende Führungselement bzw. die hieran angreifenden Führungselemente verschwenkbar sind.

Durch die Anordnung des Prüfkörpers am Versuchsgrundgestell, damit der Prüfkörper gemeinsam mit dem Versuchsgrundgestell und somit auch gemeinsam mit dem bezüglich des Versuchsgrundgestells fest installierten Kraftfahrzeugsitz entlang einer hierfür vorgesehenen Prüfstrecke bewegbar ist, lässt sich die Situation simulieren, dass ein Fahrzeuginsasse (hier repräsentiert durch den Prüfkörper) auf einem Fahrzeugsitz sitzend, durch ein Kraftfahrzeug (hier repräsentiert durch das Versuchsgrundgestell) fortbewegt wird. Kommt es zu einer plötzlichen starken (positiven oder negativen) Beschleunigung des Versuchsgrundgestells, was etwa einem Crash-Fall bei Benutzung eines Kraftfahrzeugs entspricht, so kann der beweglich am Versuchsgrundgestell geführte Prüfkörper eine Relativbewegung bezüglich des fest am Versuchsgrundgestell installierten Fahrzeugsitzes durchführen, wobei diese Relativbewegung des Prüfkörpers durch die am Prüfkörper (als Folge einer positiven oder negativen Beschleunigung des Versuchsgrundgestells) wirkenden Trägheitskräfte hervorgerufen wird. Der Prüfkörper wirkt hierbei in definierter Weise auf den Kraftfahrzeugsitz ein, was der Einwirkung eines Fahrzeuginsassen auf einen Kraftfahrzeugsitz in einem Crash-Fall entspricht, wenn der fest mit der Fahrzeugkarosserie verbundene Fahrzeugsitz einerseits und der den Fahrzeugsitz nutzende Fahrzeuginsasse andererseits ebenfalls relativ zueinander bewegt werden.

Um Belastungen eines Fahrzeugsitzes, die im Betrieb eines Kraftfahrzeugs bei starker (positiver oder negativer) Beschleunigung auftreten können, insbesondere hervorgerufen durch einen den entsprechenden Sitz nutzenden Fahrzeuginsassen, bei der Prüfung eines Kraftfahrzeugsitzes möglichst genau nachvollziehen zu können, ist der Prüfkörper längsbeweglich und schwenkbar an dem Versuchsgrundgestell geführt. Das heißt, je nachdem, ob eine längsbewegliche oder eine schwenkbare Führung oder eine Kombination einer längsbeweglichen und einer schwenkbaren Führung des Prüfkörpers durchgeführt wird, lassen sich unterschiedliche Relativbewegungen des Prüfkörpers bezüglich des Fahrzeugsitzes bei starken Beschleunigungen, zum Beispiel infolge einer Kollision mit einem Drittobjekt, und deren Rückwirkungen auf den Fahrzeugsitz untersuchen.

Ein besonders detailliertes Nachzeichnen der Belastungen, die von einem Fahrzeuginsassen auf einen Kraftfahrzeugsitz beim Auftreten starker (positiver oder negativer) Beschleunigungen ausgeübt werden, lässt sich dabei dann erreichen, wenn eine Kombination einer längsbeweglichen und einer schwenkbaren Führung des Prüfkörpers am Versuchsgrundgestell vorgesehen ist.

Gemäß einer Variante sind die Führungsschienen am Versuchsgrundgestell angeordnet und die hieran verschieblich eingreifenden Führungselemente sind dem Prüfkörper zugeordnet. Jedoch kann nach einer anderen Variante auch vorgesehen sein, dass die Führungsschienen mit dem Prüfkörper zu einer Baugruppe zusammengefasst sind und das hieran längsbeweglich zu führende Führungselement bzw. die hieran längsbeweglich angreifenden Führungselemente am Versuchsgrundgestell vorgesehen sind.

Die Führungsschienen verlaufen jedoch keineswegs exakt parallel zur Fahrzeuglängsachse, sondern sind geneigt zu jener Achse angeordnet, insbesondere mit einer Komponente entlang der vertikalen Fahrzeugachse (welche sich vom Boden zum Dach eines Kraftfahrzeugs erstreckt) und/oder entlang der horizontalen Fahrzeugquerachse (welche sich senkrecht sowohl zur Fahrzeuglängsachse als auch zur vertikalen Fahrzeugachse zwischen den beiden einander gegenüber liegenden seitlichen Karosseriebereichen eines Kraftfahrzeugs erstreckt). Mit der letztgenannten Konfiguration lässt sich insbesondere ein Schrägaufprall eines Drittobjektes auf ein Kraftfahrzeug simulieren, bei dem die Relativbewegung eines Fahrzeuginsassen zu seinem Sitz neben einer Komponente entlang der Fahrzeuglängsachse auch eine Komponente entlang der horizontalen Fahrzeugquerachse aufweist.

Um unterschiedliche Belastungssituationen nachstellen und deren Auswirkungen auf einen zu prüfenden Kraftfahrzeugsitz untersuchen zu können, ist die Neigung der mindestens einen Führungsschiene vorteilhaft einstellbar, etwa indem die Führungsschiene über einen Neigungsverstellmechanismus mit dem Versuchsgrundgestell verbunden ist.

Gemäß einer Weiterbildung der Erfindung sind die Führungsschienen quer zu ihrer Erstreckungsrichtung nebeneinander angeordnet, beispielsweise drei Führungsschienen, so dass die zur Führung des Prüfkörpers vorgesehene Führungsschienenanordnung eine mittlere Führungsschiene sowie zwei äußere Führungsschienen umfasst.

Weiterhin kann eine schwenkbare Lagerung des Prüfkörpers an der mindestens einen Führungsschiene bzw. dem mindestens einen Führungselement vorgesehen sein, je nachdem ob der Prüfkörper mit der mindestens einen Führungsschiene oder dem mindestens einen beweglich hieran gelagerten Führungselement zu einer Baugruppe zusammengefasst ist.

Die Führungsschienen erstrecken sich bevorzugt oberhalb der Sitzfläche eines in der Prüfvorrichtung aufgenommenen Fahrzeugsitzes. Der zugehörige Prüfkörper ist dann vorteilhaft unterhalb jener Führungsschienen angeordnet, so dass er durch Führung entlang der Führungsschienen mit dem unterhalb der Führungsschienen gelegenen Sitzbereichen in Kontakt treten kann, um das Verhalten des Sitzes unter bestimmten Belastungen zu untersuchen.

Der zur Belastung des zu prüfenden Fahrzeugsitzes unter der Wirkung von Beschleunigungskräften vorgesehene Prüfkörper kann beispielsweise durch eine von einer (flexiblen oder eigensteifen) Hülle umgebenen Rahmenkonstruktion gebildet werden, also einen Rahmen und eine den Rahmen umgebende Hülle umfassen. Als Material für die Hülle des Prüfkörpers eignet sich beispielsweise Kunststoff, wobei eine erhöhte Steifigkeit der Hülle durch die Verwendung eines (Glas-) faserverstärkten Kunststoffes erreicht werden kann.

Je nachdem, ob insbesondere die Eigenschaften des die untere Sitzfläche bildenden Sitzpolsters und/oder der Rückenlehne eines Kraftfahrzeugsitzes unter beschleunigungsbedingten Belastungen geprüft werden sollen, kann der Prüfkörper (durch seine Geometrie) dem Beckenbereich und/oder dem Rückenbereich eines Fahrzeuginsassen nachgebildet sein. Weiterhin kann der Prüfkörper Komponenten eines Testdummies für Kraftfahrzeuge umfassen.

Zur Ermittlung der Reaktion des zu prüfenden Fahrzeugsitzes auf eine Belastung mittels des Prüfkörpers kann eine Beobachtungseinrichtung, insbesondere in Form einer Sensoreinrichtung und/oder einer Kamera, vorgesehen sein.

Ein Verfahren zur Prüfung von Fahrzeugsitzen unter beschleunigungsbedingten Belastungen, insbesondere unter Verwendung einer erfindungsgemäßen Prüfvorrichtung, ist durch die Merkmale des Anspruchs 12 charakterisiert. Vorteilhafte Weiterbildungen des Verfahrens ergeben sich aus den von Patentanspruch 12 abhängigen Ansprüchen.

Die Prüfvorrichtung und das Verfahren gemäß der vorliegenden Erfindung können sowohl im Rahmen der Entwicklung von Fahrzeugsitzen selbst sowie bei deren Überprüfungen in der Serienfertigung eingesetzt als auch für die Ermittlung charakteristischer Sitzkennwerte verwendet werden. Letztere finden Eingang in komplexe Berechnungsmodelle bei der Entwicklung von Fahrzeugsicherheitssystemen, in denen der Fahrzeugsitz nur eine Komponente darstellt.

Weitere Einzelheiten und Vorteile der Erfindung werden bei der nachfolgenden Beschreibung von Ausführungsbeispielen anhand der Figuren deutlich werden.

Es zeigen:
- Fig. 1: ein Versuchsgrundgestell einer Prüfvorrichtung zum Prüfen eines Kraftfahrzeugsitzes unter beschleunigungsbedingten Belastungen in perspektivischer Darstellung;
- Fig. 2a: eine Seitenansicht einer Führungsschienenanordnung zur Befestigung an dem Versuchsgrundgestell aus Figur 1, mit der ein Prüfkörper der Prüfvorrichtung längsbeweglich geführt werden kann;
- Fig. 2b eine: perspektivische Darstellung der Führungsschienenanordnung aus Figur 2a;
- Fig. 3a: eine Seitenansicht eines Prüfkörpers zur Führung an der Führungsschienenanordnung aus den Figuren 2a und 2b;
- Fig. 3b: eine Draufsicht auf den Prüfkörper aus Figur 3a;
- Fig. 4a: eine Seitenansicht des Versuchsgrundgestells aus Figur 1 zusammen mit der hieran befestigten Führungsschienenanordnung aus den Figuren 2a und 2b sowie einem Prüfkörper aus den Figuren 3a und 3b, wobei das Versuchsgrundgestell auf einen verfahrbaren Testschlitten montiert ist und einen zu prüfenden Kraftfahrzeugsitz trägt;
- Fig. 4b: eine Draufsicht auf die Anordnung aus Figur 4a;
- Fig. 5a: eine Abwandlung der Anordnung aus Figur 4a hinsichtlich der Richtung, entlang der der Prüfkörper längsbeweglich an der Führungsschienenanordnung geführt ist;
- Fig. 5b: eine Draufsicht auf die Anordnung aus Figur 5a;
- Fig. 6: eine Abwandlung der Anordnung aus Figur 4a mit einer Hebelanordnung zur beweglichen Führung des Prüfkörpers;
- Fig.7: eine weitere Abwandlung der Anordnung aus Figur 4a mit einer Hebelanordnung zur beweglichen Führung des Prüfkörpers.

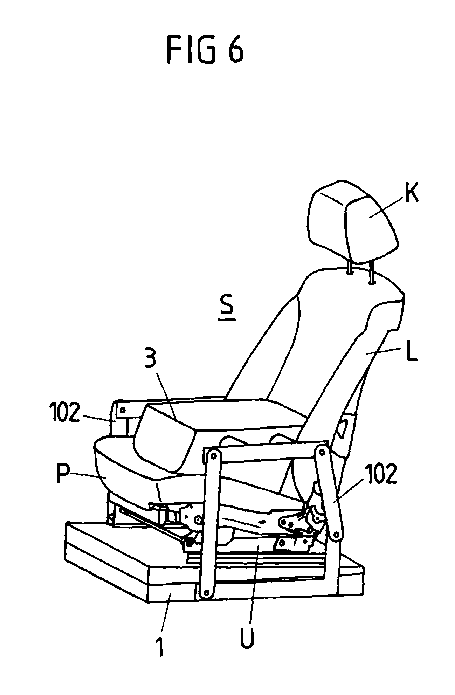

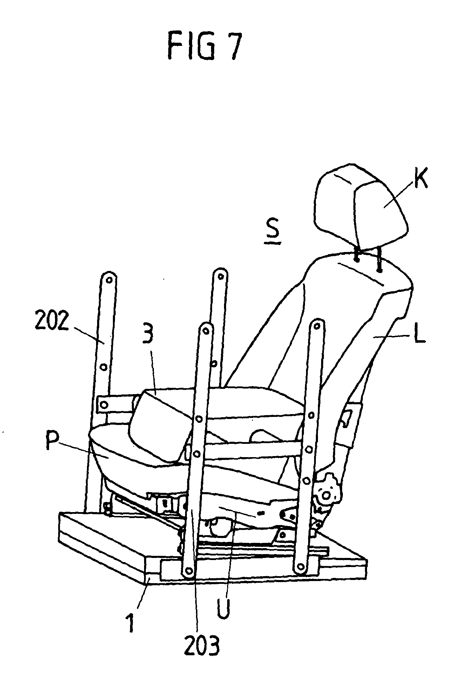

Die Figuren 6 und 7 zeigen keine Ausführungsformen der Erfindung und dienen lediglich der Erläuterung des technischen Hintergrundes.

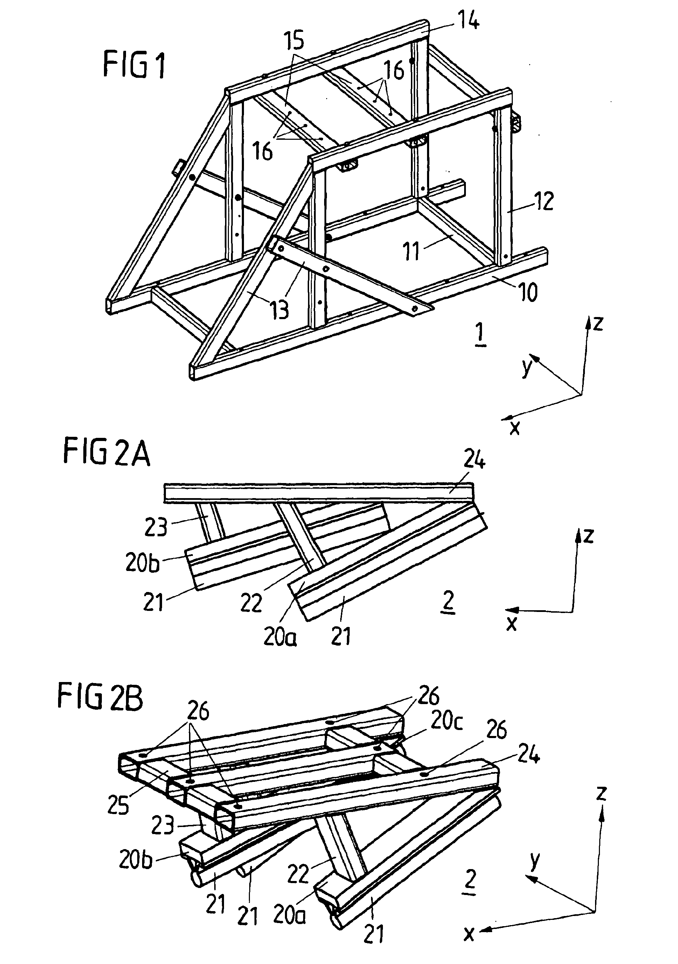

Figur 1 zeigt in perspektivischer Darstellung ein Grundgestell 1 einer Prüfvorrichtung, mit der charakteristische Eigenschaften eines Fahrzeugsitzes unter beschleunigungsbedingten Belastungen ermittelbar sind. Das in Figur 1 dargestellte Koordinatensystem bezieht sich dabei auf den bestimmungsgemäß in ein Kraftfahrzeug eingebauten Zustand eines mittels der Prüfvorrichtung zu untersuchenden Kraftfahrzeugsitzes, so dass die x-Achse mit der Fahrzeuglängsachse, die y-Achse mit der horizontalen Fahrzeugquerachse und die z-Achse mit der vertikalen Fahrzeugachse - jeweils bezogen auf den bestimmungsgemäß in ein Kraftfahrzeug eingebauten Zustand des Fahrzeugsitzes - zusammenfällt.

Das Versuchsgrundgestell 1 wird gebildet durch eine Rahmenkonstruktion aus (metallischen) Rahmenteilen 10, 11, 12, 13, 14, 15. Dabei bilden erste Rahmenteile 10, 11 eine (horizontale) Basis des Versuchsgrundgestells 1, die sich im Wesentlichen entlang der der xy-Ebene erstreckt. Hiervon stehen zweite Rahmenteile 12 entlang der z-Achse vertikal nach oben ab, die durch Diagonalstreben 13 verstärkt sind. Auf der der Basis 10, 11 abgewandten Seite sind an den vertikal erstreckten Rahmenteilen 12 (entlang der x-Achse verlaufende) Längsträger 14 angeordnet, die wiederum (entlang der y-Achse verlaufende) Querträger 15 tragen. Die Querträger 15 sind mit Befestigungsstellen 16 versehen, über die eine Führungsschienenanordnung am Versuchsgrundgestell 1 befestigt werden kann.

Die konkrete Ausbildung des Versuchsgrundgestells 1 gemäß Figur 1 ist dabei lediglich als ein Ausführungsbeispiel eines Versuchsgrundgestells anzusehen; wichtig bei dem in Figur 1 gezeigten Versuchsgrundgestell 1 ist, dass es Befestigungsstellen 16 zur Befestigung einer Führungsschienenanordnung aufweist.

Unter einem Versuchsgrundgestell wird vorliegend allgemein eine beliebig gestaltete tragende Baueinheit verstanden, an der sich ein Prüfkörper, sei es über eine Führungsschienenanordnung, sei es über eine Hebelanordnung oder sei es in sonstiger Weise, derart beweglich lagern lässt, dass bei einer starken Beschleunigung des Versuchsgrundgestells eine Relativbewegung des Prüfkörpers bezüglich des Versuchsgrundgestells erzeugt wird und der Prüfkörper Belastungskräfte auf einen bezüglich des Versuchsgrundgestells fest installierten Kraftfahrzeugsitz ausübt.

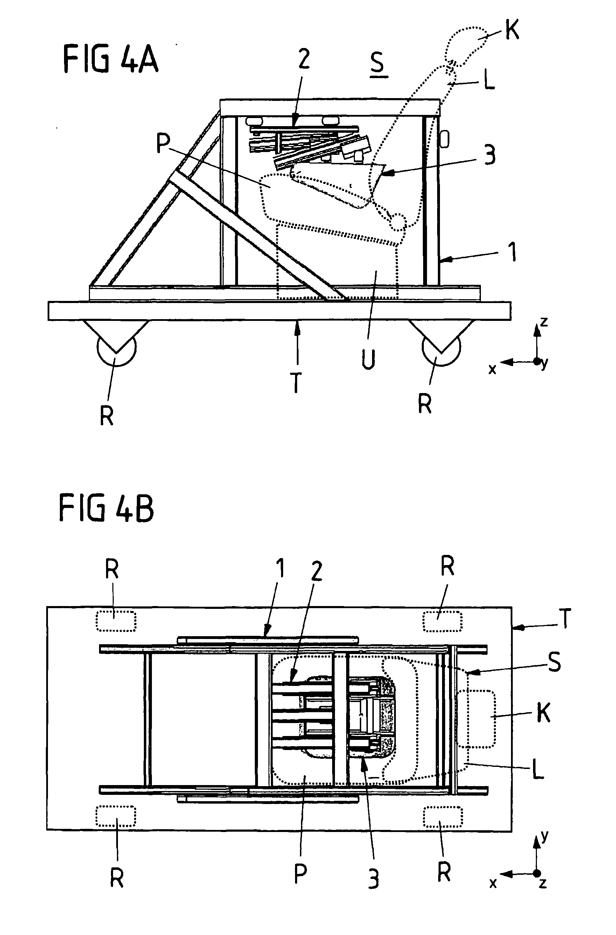

Der Sitz muss dabei nicht am Versuchsgrundgestell selbst installiert sein, sondern kann beispielsweise ebenso an einem Testschlitten T vorgesehen sein, mit dem das Versuchsgrundgestell 1 verfahren wird, vergl. Figuren 4a und 4b.

Weiterhin muss es sich bei den Testschlitten T einerseits und dem Versuchsgrundgestell 1 andererseits nicht zwingend um separate, miteinander verbindbare Baugruppen handeln. Vielmehr kann das Versuchsgrundgestell auch einen unmittelbaren (z. B. unlösbaren) Bestandteil eines Testschlittens bilden.

Von Bedeutung ist, dass einem zu prüfenden Fahrzeugsitz ein verfahrbares Versuchsgrundgestell zugeordnet ist, das gemeinsam mit dem Fahrzeugsitz entlang einer Prüf- bzw. Teststrecke verfahren werden kann, wobei bei einer abrupten (negativen oder positiven) Beschleunigung des Versuchsgrundgestells, z. B. ausgelöst durch einen geeigneten Antrieb und/oder eine Kollision, ein am Versuchsgrundgestell beweglich geführter Trägerkörper eine Relativbewegung zum Versuchsgrundgestell ausführt und dabei auf den zu prüfenden Fahrzeugsitz einwirken kann.

Somit bedeutet eine feste Installation des Fahrzeugsitzes bezüglich des Versuchsgrundgestells nicht, dass der Fahrzeugsitz völlig unbeweglich, d. h. starr, am Versuchsgrundgestell gehalten sein muss. So kann es durchaus zweckmäßig sein, eine gewisse Beweglichkeit des Fahrzeugsitzes bezüglich des Versuchsgrundgestells zuzulassen, um Bewegungen eines Fahrzeugsitzes in einem Kraftfahrzeug zu simulieren, die bei schweren Unfällen, etwa als Folge einer nicht mehr intakten Verbindung zwischen dem Fahrzeugsitz und der Fahrzeugkarosserie, herbeigeführt werden. Von Bedeutung ist, dass der Fahrzeugsitz gemeinsam mit dem Versuchsgrundgestell, an dem ja der zur Einwirkung auf den Fahrzeugsitz vorgesehene Prüfkörper geführt ist, gemeinsam verfahren werden kann und dass bei einer plötzlichen, starken Beschleunigung des Versuchsgrundgestells, insbesondere einer starken Abbremsung, der Fahrzeugsitz so am Versuchsgrundgestell gehalten wird, dass der Prüfkörper bei einer Auslenkung bezüglich des Versuchsgrundgestells auf jenen Sitz in definierter Weise einwirken kann.

Je nach konkreter Ausgestaltung der zur Untersuchung charakteristischer Eigenschaften eines Fahrzeugsitzes verwendeten Prüfvorrichtung kann das Versuchsgrundgestell 1 aus Figur 1 beispielsweise so abgewandelt werden, dass es zur Lagerung einer Hebelanordnung dient, wie weiter unten anhand der Figuren 6 und 7 noch erläutert werden wird.

In den Figuren 2a und 2b ist eine Führungsschienenanordnung 2 dargestellt, die über die besagten Befestigungsstellen 16 am Versuchsgrundgestell 1 zu befestigen ist.

Die Führungsschienenanordnung 2 umfasst eine Mehrzahl, nämlich drei, längserstreckte Führungsschienen 21, die an einem (metallischen) Impaktorgestell 20a, 20b, 20c, 22, 24, 25 angeordnet sind, welches über impaktorgestellseitige Befestigungsstellen 26 an dem Versuchsgrundgestell 1 zu befestigen ist. Hierzu können beispielsweise Befestigungselemente in Form von Schrauben vorgesehen sein, die als Befestigungsöffnungen ausgebildete Befestigungsstellen 16, 26 am Versuchsgrundgestell 1 einerseits und am Impaktorgestell andererseits durchgreifen und durch Muttern gesichert werden.

Das Impaktorgestell der Führungsschienenanordnung 2 umfasst eine durch erste Rahmenteile 24, 25 gebildete horizontale Basis, an der die Befestigungsstellen 26 zur Befestigung des Impaktorgestells bzw. der Führungsschienenanordnung 2 am Versuchsgrundgestell vorgesehen sind. Nach ordnungsgemäßer Befestigung des Impaktorgestells am Versuchsgrundgestell 1 erstreckt sich die durch erste Rahmenteile 24, 25 gebildete Basis des Impaktorgestells im Wesentlichen entlang der xy-Ebene, vergleiche Figuren 4a und 4b.

An der durch die ersten Rahmenteile 24, 25 gebildeten Basis des Impaktorgestells 22 - 25 sind Führungsschienenträger 20a, 20b, 20c für die drei Führungsschienen 21 angeordnet, wobei die Führungsschienenträger 20a, 20b, 20c jeweils mit einem Ende mit der Basis 24, 25 des Impaktorgestells 22 - 25 verbunden sind und darüber hinaus (z. B. im Bereich ihres anderen Endes) über Distanzelemente 22, 23 mit jener Basis 24, 25 in Verbindung stehen.

Die Distanzelemente 22, 23 können eine Einstellvorrichtung bilden, z. B. durch eine längenveränderliche (teleskopierbare) Ausgestaltung der Distanzelemente 22, 23, so dass über die Distanzelemente 22, 23 der Abstand des freien, der Basis 24, 25 abgewandten Endes eines jeweiligen Führungsschienenträgers 20a, 20b, 20c von der Basis 24, 25 einstellbar ist und damit insbesondere auch die Neigung der Führungsschienenträger 20a, 20b, 20c bezüglich jener Basis.

Wie aus den Figuren 2a und 2b bei einer Zusammenschau mit Figur 1 hervorgeht, erstrecken sich die Führungsschienenträger 20a, 20b, 20c nach bestimmungsgemäßer Befestigung des Impaktorgestells 22 - 25 an dem Versuchsgrundgestell 1 jeweils entlang der x-Achse (entsprechend der Fahrzeuglängsachse) und sind dabei derart bezüglich dieser Achse geneigt, dass die Erstreckungsrichtung der Führungsschienenträger 20a, 20b, 20c jeweils eine Komponente entlang der z-Achse (entsprechend der vertikalen Fahrzeugachse) aufweist.

Die Führungsschienenträger 20a, 20b, 20c sind quer zu ihrer Erstreckungsrichtung (also entlang der y-Achse/horizontalen Fahrzeugquerachse) nebeneinander angeordnet und dabei voneinander beabstandet, wobei der mittlere Führungsschienenträger 20b eine andere (kleinere) Neigung bezüglich der x-Achse bzw. Fahrzeuglängsachse aufweist als die beiden äußeren Führungsschienenträger 20a, 20c.

Jeder der Führungsschienenträger 20a, 20b, 20c trägt jeweils eine Führungsschiene 21 in Form einer Führungswelle bzw. eines (längsgeschlitzten Führungsrohres) , welche sich ebenso wie die Führungsschienenträger 20a, 20b, 20c entlang der x-Achse erstrecken und dabei derart bezüglich dieser geneigt sind, dass die von der jeweiligen Führungsschiene 21 definierte Führungsbahn eine Komponente entlang der z-Achse aufweist. Dabei ist die mit dem mittleren Schienenträger 20b verbundene Führungsschiene 21 weniger stark gegenüber der x-Achse geneigt, als die beiden äußeren, seitlichen Führungsschienen 21.

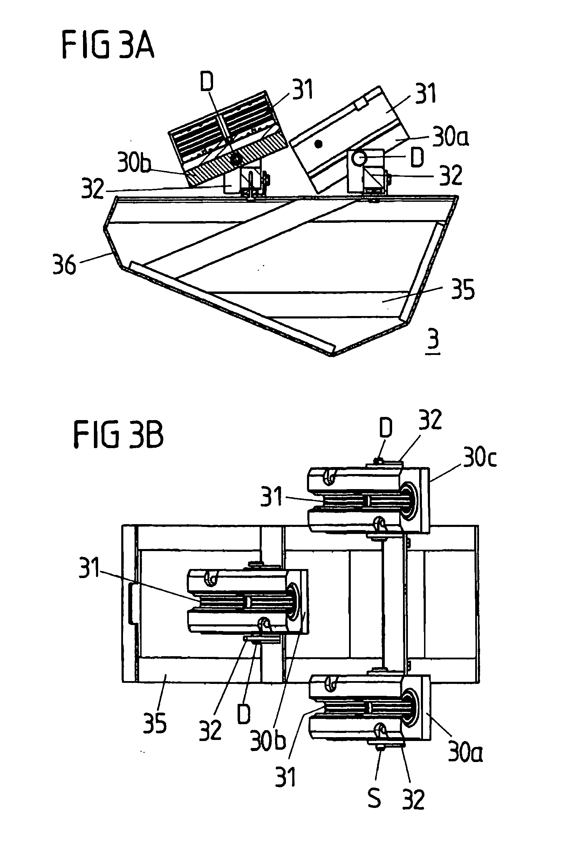

Ein an der Führungsschienenanordnung 2 aus den Figuren 2a und 2b längsbeweglich zu führender Prüfkörper 3 (Impaktor) ist in den Figuren 3a und 3b dargestellt. Der Prüfkörper 3 wird gebildet durch eine Rahmenkonstruktion 35, die von einer (eigensteifen) äußeren Hülle 36 umgeben ist, z. B. bestehend aus (faserverstärktem) Kunststoff. Der Prüfkörper 3 bzw. genauer dessen Rahmenkonstruktion 35 und Hülle 36 sind hier so ausgestaltet, dass sie insbesondere geeignet sind, den Beckenbereich eines Fahrzeuginsassen zu repräsentieren. Der Prüfkörper 3 kann z.B. auch durch Komponenten eines für Crash-Tests vorgesehenen Test-Dummies gebildet werden.

Von der (aus einem hinreichend steifen Material, z. B. Metall oder einem besonders harten Kunststoff) bestehenden Rahmenkonstruktion 35 des Prüfkörpers 3 stehen (im Ausführungsbeispiel 3) Lagerelemente 32 ab, an denen jeweils um eine Drehachse D verschwenkbar ein Halter 30a, 30b, 30c für ein durch eine Führungsbuchse gebildetes Führungselement 31 angelenkt ist.

Die Führungselemente 31 in Form von Führungsbuchsen sind so ausgestaltet; dass sie mit jeweils einer der am Versuchsgrundgestell 1 vorgesehenen Führungsschienen 21 längsbeweglich in Eingriff bringbar sind, wobei - wegen der schwenkbaren Anlenkung des Prüfkörpers 3 an den Haltern 30a, 30b, 30c der Führungselemente 31 über die prüfkörperseitigen Lagerelemente 32 - der Prüfkörper 3 bezüglich der Führungselemente 31 und somit auch bezüglich der Führungsschienenanordnung 2 sowie des Versuchsgrundgestells 1 verschwenkbar ist, und zwar um eine entlang der y-Achse bzw. horizontalen Fahrzeugquerachse, parallel zu den Drehachsen D verlaufende Schwenkachse. Hierdurch können beschleunigungsbedingt am Prüfkörper 35 wirkende Kräfte nicht nur eine Längsbewegung des Prüfkörpers 35 entlang der Führungsschienen 21 bewirken, sondern darüber hinaus auch eine Schwenkbewegung des Prüfkörpers 3 bezüglich des Versuchsgrundgestells 1 bzw. eines gemäß den Figuren 4a und 4b am Versuchsgrundgestell anzuordnenden Kraftfahrzeugsitzes S.

Dabei ist in der Regel keine elastische Verspannung des Prüfkörpers 3 bezüglich der Drehachsen D in eine bestimmte Lage erforderlich. So kann der Prüfkörper 3 frei bezüglich der Drehachsen D verschwenkbar gelagert sein, wobei der Prüfkörper 3 für eine definierte Positionierung anfänglich, d. h. vor einem Verfahren der Anordnung, mit seinem Eigengewicht auf einer zugeordneten (Sitz-)Fläche eines zu prüfenden Kraftfahrzeugsitzes aufliegt, wie nachfolgend in den Figuren 4a und 4b dargestellt. Für eine definierte Positionierung des Prüfkörpers 3 bezüglich eines zu prüfenden Kraftfahrzeugsitzes kann dabei die Position des zu prüfenden Kraftfahrzeugsitzes, z. B. entlang der x-Achse, einstellbar sein. Alternativ ist es beispielsweise möglich, den Prüfkörper 3 entlang der x-Achse in eine durch Anschläge definierte hintere Endlage zu bringen und über eine Höhenverstellung des zu prüfenden Kraftfahrzeugsitzes entlang der z-Achse einen definierten Anpressdruck zu erzeugen, mit dem der Prüfkörper 3 an einen zu prüfenden Kraftfahrzeugsitz anliegt. Gegebenenfalls kann aber bei Bedarf auch eine Verspannung des Prüfkörpers 3 in eine bestimmte Lage mittels separater, hierfür geeigneter elastischer Elemente vorgesehen sein.

In den Figuren 4a und 4b ist das Versuchsgrundgestell 1 zusammen mit der hieran angeordneten Führungsschienenanordnung 2 und dem an der Führungsschienenanordnung 2 geführten Prüfkörper 3 sowie einem das Versuchsgrundgestell 1 aufnehmenden Testschlitten T und einem am Versuchsgrundgestell 1 fest installierten Kraftfahrzeugsitz S dargestellt.

Das Versuchsgrundgestell 1 ist derart an dem Testschlitten T fixiert, dass das Versuchsgrundgestell 1 mittels des Testschlittens T entlang einer vorgegebenen Prüfstrecke bewegt und dabei beschleunigt werden kann. Hierzu weist der Testschlitten T entsprechende Fortbewegungsmittel, wie zum Beispiel Räder R, auf.

Der Kraftfahrzeugsitz S ist fest bezüglich des Versuchsgrundgestells 1 installiert und hierzu entweder am Versuchsgrundgestell 1 festgelegt oder an einem bezüglich des Versuchsgrundgestells 1 festen Teil, wie zum Beispiel dem Testschlitten T. Hierzu dient ein Untergestell U des Kraftfahrzeugsitzes S, auf dem ein Sitzpolster P des Kraftfahrzeugsitzes S angeordnet ist. Dieses bildet eine Sitzfläche für einen Sitzbenutzer. An dem Polsterträger des Sitzpolsters P ist eine Rückenlehne L des Kraftfahrzeugsitzes S angelenkt, an deren oberem Ende noch eine Kopfstütze K vorgesehen ist.

Wie anhand der Figuren 4a und 4b deutlich wird, sind der Kraftfahrzeugsitz S einerseits und der Prüfkörper 3 andererseits derart bezüglich des Versuchsgrundgestells 1 angeordnet, dass der hier beispielhaft den Beckenbereich eines Fahrzeuginsassen repräsentierende Prüfkörper 3 mit seiner äußeren Hülle einerseits an der durch das Sitzpolster P gebildeten Sitzfläche und andererseits am unmittelbar an jene Sitzfläche anschließenden unteren Endabschnitt der Rückenlehne L anliegt.

Zur Durchführung eines Tests, bei dem charakteristische Eigenschaften des Kraftfahrzeugsitzes S ermittelt werden sollen, hier speziell zur Nachstellung eines Frontalaufpralls, wird der Testschlitten T entlang der x-Richtung bewegt, die - bezogen auf einen bestimmungsgemäßen Einbau des Kraftfahrzeugsitzes K in ein Kraftfahrzeug - der Fahrzeuglängsachse entspricht. Bei einer Bewegung des Testschlittens T werden das hieran fixierte Versuchsgrundgestell 1, der fest bezüglich des Versuchsgrundgestells installierte Kraftfahrzeugsitz S sowie weiterhin der über eine Führungsschienenanordnung 2 längsbeweglich und schwenkbar am Versuchsgrundgestell 1 geführte Prüfkörper 3 mitgenommen. Selbstverständlich können aber auch Bewegungen des Testschlittens in anderen Richtungen vorgenommen werden. Wird der Testschlitten beispielsweise entgegen der x-Richtung abrupt beschleunigt, werden (im Unterschied zu dem nachfolgend beschriebenen Fall) die für einen Frontalaufprall charakteristischen Eigenschaften des Kraftfahrzeugsitzes S während der Beschleunigungsphase ermittelt.

Zur Ermittlung des Verhaltens des Kraftfahrzeugsitzes S unter der Wirkung größerer beschleunigungsbedingter Belastungen, wird der Testschlitten T dann stark abgebremst, was etwa einer Kollision (Crash-Fall) eines tatsächlichen Kraftfahrzeugs entspricht. Hierbei kann der Prüfkörper 3 unter der Wirkung der mit der starken negativen Beschleunigung des Testschlittens T und des Versuchsgrundgestells 1 verbundenen Trägheitskräfte - wegen seiner längsbeweglichen und verschwenkbaren Lagerung - eine Bewegung relativ zu dem fest bezüglich des Versuchsgrundgestells 1 installierten Kraftfahrzeugsitz S ausführen, die in etwa der Relativbewegung des Beckenbereichs eines Kraftfahrzeuginsassen bezüglich des Sitzes S in einem Kollisionsfall entspricht. Hierdurch erfährt der bezüglich des Versuchsgrundgestells 1 fest installierte, zu prüfende Kraftfahrzeugsitz S im Bereich der Sitzfläche des Sitzpolsters P in etwa dieselben Belastungen, die bei einer entsprechenden Abbremsung (etwa hervorgerufen durch eine Kollision) in einem Kraftfahrzeug aufträten, und durch eine Relativbewegung des Sitzbenutzers bezüglich des Kraftfahrzeugsitzes hervorgerufen würden. Die Reaktion des zu prüfenden Sitzes auf diese Belastungen lässt sich beispielsweise mittels einer Sensoranordnung, deren Ausgangssignale einer Auswerteinheit zugeführt werden, oder einer Kamera erfassen.

Zusammenfassend ist der Prüfköper 3 aufgrund seiner beweglichen Lagerung am Versuchgrundgestell 1 dazu eingerichtet und vorgesehen, bei einer Bewegungsänderung (positiven oder negativen Beschleunigung) des Versuchsgrundgestells 1 eine Relativbewegung bezüglich des Versuchsgrundgestells 1 und somit bezüglich des hieran angeordneten Kraftfahrzeugsitzes S ausführen, welche Relativbewegung durch die (bei einer Beschleunigung des Versuchsgrundgestells 1) am Prüfkörper 3 wirkenden Trägheitskräfte ausgelöst wird und womit eine Relativbewegung eines Sitzbenutzers bezüglich des zu prüfenden Kraftfahrzeugsitzes simuliert werden soll.

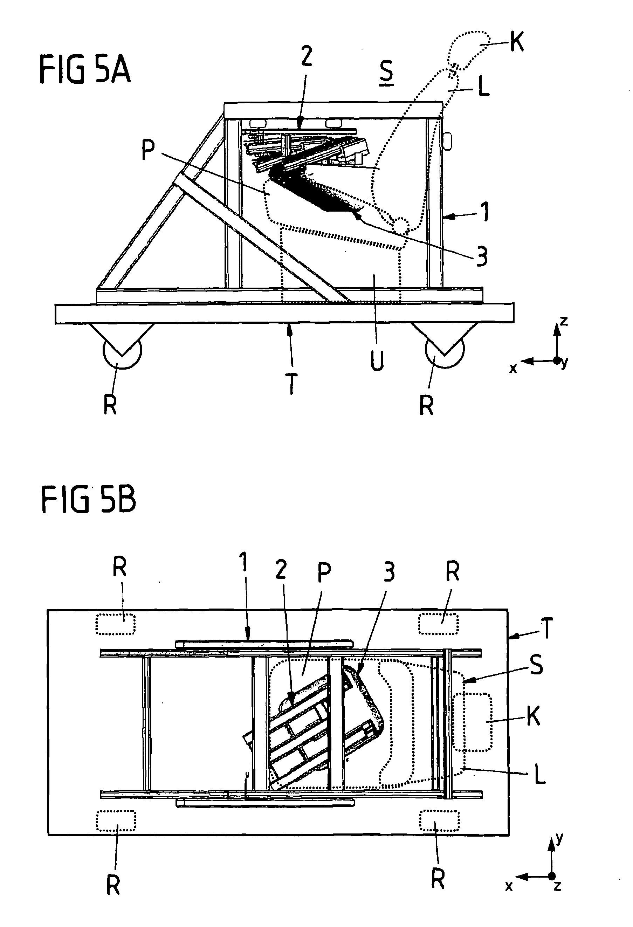

Die Figuren 5a und 5b zeigen eine Abwandlung der Anordnung aus den Figuren 4a und 4b, mit der die Auswirkungen eines Schrägaufpralls auf einen zu prüfenden Kraftfahrzeugsitz ermittelt werden sollen, also eines Aufpralls, bei dem auf den zu prüfenden Kraftfahrzeugsitz S nicht nur Kräfte entlang der Fahrzeuglängsachse x, sondern auch entlang der horizontalen Fahrzeugquerachse y wirken.

Hierzu ist die Führungsschienenanordnung 2, verglichen mit deren Orientierung im Ausführungsbeispiel der Figuren 4a und 4b, derart verdreht, dass die Führungsschienen 21 (vergleiche Figuren 2a und 2b) der Führungsschienenanordnung 2 nicht nur Erstreckungskomponenten entlang der Fahrzeuglängsachse x und der vertikalen Fahrzeugachse z sondern auch entlang der horizontalen Fahrzeugquerachse y aufweisen. Hierdurch wird der an der Führungsschienenanordnung 2 gelagerte Prüfkörper 3 unter der Wirkung beschleunigungsbedingter Kräfte auch mit einer Bewegungskomponente entlang der horizontalen Fahrzeugquerachse y bewegt und wirkt somit auch entlang jener Richtung y auf den zu prüfenden Fahrzeugsitz, insbesondere auf dessen Sitzpolster P und/oder Rückenlehne L, ein, so dass charakteristische Eigenschaften des zu prüfenden Fahrzeugsitzes S unter der Wirkung entlang der horizontalen Fahrzeugquerachse y gerichteter Kräfte ermittelt werden können.

Bei dem im Figur 6 gezeigten Beispiel geht es wiederum um die Bereitstellung einer Prüfvorrichtung zur Prüfung eines Fahrzeugsitzes S, wobei hier eine längsbewegliche und schwenkbare Führung des Prüfkörpers 3 an einem Versuchsgrundgestell 1 nicht über eine Führungsschienenanordnung sondern vielmehr über eine Hebelanordnung 102 erfolgt und wobei eine Schwenkbewegung durch unterschiedliche Schwenkradien der im Wesentlichen vertikal verlaufenden Hebel in den Prüfkörper eingeleitet werden kann.

Figur 7 zeigt eine Abwandlung der Anordnung aus Figur 6, wobei der wesentliche Unterschied darin besteht, dass die in Figur 7 gezeigte Hebelanordnung 202 lediglich für eine längsbewegliche Lagerung des Prüfkörpers 3 dient, eine Schwenkbewegung bzw. Rotation des Prüfkörpers 3 zur Belastung des zu prüfenden Fahrzeugsitzes S hier also nicht vorgesehen ist.

Anhand einer Zusammenschau der Figuren wird deutlich, dass das Versuchsgrundgestell 1 sehr unterschiedlich ausgestaltet sein kann und etwa im Fall der Figuren 6 und 7 lediglich aus einer Grundplatte besteht.

## Patentansprüche

1. Vorrichtung zur Prüfung eines Kraftfahrzeugsitzes unter der Wirkung externer Belastungen, mit
- einem entlang einer Prüfstrecke verfahrbaren Versuchsgrundgestell, bezüglich dem der zu prüfende Fahrzeugsitz festzulegen ist, und
- einem Prüfkörper zur Belastung des Fahrzeugsitzes bei Bewegungsänderungen des Versuchsgrundgestells,
wobei der Prüfkörper (3) derart beweglich und schwenkbar am Versuchsgrundgestell (1) geführt ist, dass der Prüfkörper (3) gemeinsam mit dem Versuchsgrundgestell (1) entlang einer Prüfstrecke verfahrbar ist und der Prüfkörper (3) bei Bewegungsänderungen des Versuchsgrundgestells (1) aufgrund der als Folge hiervon am Prüfkörper (3) wirkenden Trägheitskräfte relativ zu einem bestimmungsgemäß bezüglich des Versuchsgrundgestells (1) festgelegten Fahrzeugsitzes (S) bewegt wird, und wobei der Prüfkörper (3) mittels mehreren Führungsschienen (21), die sich - bezogen auf den bestimmungsgemäßen Einbau des Fahrzeugsitzes (S) in ein Kraftfahrzeug - entlang der Fahrzeuglängsachse (x) erstrecken und in die jeweils mindestens ein Führungselement (31) längsverschieblich eingreift, längsbeweglich geführt ist,
**dadurch gekennzeichnet,**
**dass** Führungsschienen (21) mit unterschiedlicher Neigung bezüglich der Fahrzeuglängsachse (x) am Versuchsgrundgestell (1) vorgesehen sind und dass mindestens eine Führungsschiene (21) und/oder mindestens ein Führungselement (31) schwenkbar gelagert ist, um den Prüfkörper (3) bezüglich des Versuchsgrundgestells (1) verschwenken zu können.

2. Vorrichtung nach Anspruch 1, **dadurch gekennzeichnet, dass** der Fahrzeugsitz (S) an dem Versuchsgrundgestell (1) oder einer mit dem Versuchsgrundgestell (1) fest verbundenen Baueinheit (T) fixiert ist.

3. Vorrichtung nach einem der vorhergehenden Ansprüche, **dadurch gekennzeichnet, dass** die Führungsschienen (21) am Versuchsgrundgestell (1) angeordnet sind.

4. Vorrichtung nach Anspruch 1, **dadurch gekennzeichnet, dass** die durch die Führungsschienen (21) definierten Führungsbahnen jeweils eine Bahnkomponente entlang der vertikalen Fahrzeugachse (z) aufweisen.

5. Vorrichtung nach Anspruch 1 oder 4, **dadurch gekennzeichnet, dass** die durch die Führungsschienen (1) definierten Führungsbahnen jeweils eine Bahnkomponente entlang der horizontalen Fahrzeugquerachse (y) aufweisen.

6. Vorrichtung nach einem der Ansprüche 1, 4 oder 5, **dadurch gekennzeichnet, dass** die Neigung der Führungsschienen (21) bezüglich der Fahrzeuglängsachse (x) einstellbar ist.

7. Vorrichtung nach einem der vorhergehenden Ansprüche, **dadurch gekennzeichnet, dass** drei Führungsschienen (21) zur Führung eines Prüfkörpers (3) vorgesehen sind und dass die durch die mittlere der drei Führungsschienen (21) definierte Führungsbahn eine kleinere Komponente entlang der vertikalen Fahrzeugachse (z) aufweist als die durch die beiden äußeren Führungsschienen (21) definierten Führungsbahnen.

8. Vorrichtung nach einem der vorhergehenden Ansprüche, **dadurch gekennzeichnet, dass** das jeweils mindestens eine Führungselement (31) am Prüfkörper (3) vorgesehen ist.

9. Vorrichtung nach Anspruch 8, **dadurch gekennzeichnet, dass** der Prüfkörper (3) schwenkbar an dem mindestens einen Führungselement (31) angelenkt ist, um den Prüfkörper (3) bezüglich des Versuchsgrundgestells (1) verschwenken zu können.

10. Vorrichtung nach einem der vorhergehenden Ansprüche, **dadurch gekennzeichnet, dass** der Prüfkörper (3) hinsichtlich seiner Geometrie dem Beckenbereich und/oder Rückenbereich eines Fahrzeuginsassen nachgebildet ist.

11. Verwendung einer Vorrichtung nach einem der vorhergehenden Ansprüche zur Prüfung eines Kraftfahrzeugsitzes bei Wirkung äußerer Belastungen.

12. Verfahren zur Prüfung eines Kraftfahrzeugsitzes unter der Wirkung externer Belastungen, wobei
- ein Versuchsgrundgestell (1) entlang einer Prüfstrecke verfahren wird, bezüglich dem der zu prüfende Fahrzeugsitz festgelegt ist, und
- ein Prüfkörper (3) vorgesehen ist, der bei Bewegungsänderungen des Versuchsgrundgestells (1) ausgelenkt wird und hierdurch den Fahrzeugsitz belastet,
wobei der Prüfkörper (3) derart beweglich und schwenkbar am Versuchsgrundgestell (1) geführt wird, dass der Prüfkörper (3) gemeinsam mit dem Versuchsgrundgestell (1) entlang der Prüfstrecke verfahren wird und der Prüfkörper (3) bei Bewegungsänderungen des Versuchsgrundgestells (1) infolge der hierbei am Prüfkörper (3) wirkenden Trägheitskräfte relativ zu dem Fahrzeugsitz (S) ausgelenkt wind, und wobei der Prüfkörper (3) mittels mehreren Führungsschienen (21), die sich - bezogen auf den bestimmungsgemäßen Einbau des Fahrzeugsitzes (S) in ein Kraftfahrzeug - entlang der Fahrzeuglängsachse (x) erstrecken und in die jeweils mindestens ein Führungselement (31) längsverschieblich eingreift, längsbeweglich geführt wird,
**dadurch gekennzeichnet,**
**dass** Führungsschienen (21) mit unterschiedlicher Neigung bezüglich der Fahrzeuglängsachse (x) am Versuchsgrundgestell (1) vorgesehen sind und dass mindestens eine Führungsschiene (21) und/oder mindestens ein Führungselement (31) schwenkbar gelagert ist, um den Prüfkörper (3) bezüglich des Versuchsgrundgestells (1) zu verschwenken.

13. Verfahren nach Anspruch 12, **dadurch gekennzeichnet, dass** das Versuchsgrundgestell (1) beim Verfahren einer positiven und/oder negativen Beschleunigung ausgesetzt wird und dass hierbei wirkende Kräfte eine Relativbewegung des Prüfkörpers (3) zum Versuchsgrundgestell (1) und zu einem fest bezüglich des Versuchsgrundgestells (1) installierten Kraftfahrzeugsitz (S) auslösen.

14. Verfahren nach Anspruch 12 oder 13, **dadurch gekennzeichnet, dass** die Relativbewegung des Prüfkörpers (3) bezüglich des Versuchsgrundgestells (1) einer Längsbewegung, einer Schwenkbewegung oder einer Überlagerung einer Längsbewegung und einer Schwenkbewegung entspricht.

15. Verfahren nach einem der Ansprüche 12 bis 14 **gekennzeichnet durch** eine Verwendung einer Prüfvorrichtung nach einem der Ansprüche 1 bis 10.

## Claims

1. Device for testing a motor vehicle seat under the influence of external loads, with
- a test frame that can be slid along a test path, relative to which test frame the vehicle seat to be tested must be fixed, and
- a test body for loading the vehicle seat when the movement of the test frame changes,
- whereby the test body (3) can be movably and rotatably guided on the test frame (1) such that the test body (3) can be slid along a test path together with a test frame (1) and the test body (3) is moved by a change of movement of the test frame (1) due to inertial forces acting on the test body (3) relative to a vehicle seat (S) conventionally assigned in respect to the test frame (1), and whereby the test body (3) is guided longitudinally by the means of multiple guiding rails (21) which extend - in respect to the conventional assembly of the vehicle seat (S) in a motor vehicle - along the motor vehicle longitudinal axle (x) and into which in each case at least one guiding element (31) engages longitudinally,
**characterized in that**
guiding rails (21) are provided with different gradient in respect to the motor vehicle longitudinal axle (x) on the test frame (1) and that at least one guiding rail (21) and/or at least one guiding element (31) is rotatably mounted, in order to be able to rotate the test body (3) in respect to the test frame (1).

2. Device according to claim 1, **characterized in that** the vehicle seat (S) is fixed on the test frame (1) or a building unit (T) tightly connected to the test frame (1).

3. Device according to one of the preceding claims, **characterized in that** the guiding rails (21) are arranged on a test frame (1).

4. Device according to claim 1, **characterized in that** the guiding paths defined by the guiding rails (21) have in each case a path component along the vertical motor vehicle axle (z).

5. Device according to claim 1 or 4, **characterized in that** the guiding paths defined by the guiding rails (21) have in each case a path component along the horizontal motor vehicle cross axle (y).

6. Device according to one of the claims 1, 4 or 5, **characterized in that** the gradient of the guiding rails (21) can be adjusted in respect to the motor vehicle longitudinal axle (x).

7. Device according to one of the preceding claims, **characterized in that** three guiding rails (21) are provided for guiding a test body (3) and that the guiding path defined by the central one of the three guiding rails (21) has a smaller component along the vertical motor vehicle axle (z) than the guiding paths defined by the two outer guiding rails (21).

8. Device according to one of the preceding claims, **characterized in that** in each case at least one guiding element (31) is provided on the test body (3).

9. Device according to claim 8, **characterized in that** the test body (3) is hinged rotatably on the at least one guiding element (31) in order to be able to rotate the test body (3) in respect to the test frame (1).

10. Device according to one of the preceding claims, **characterized in that** the test body (3) is replicated in respect to its geometry based on the pelvis area and/or back area of a passenger.

11. Use of a device according to one of the preceding claims for testing a motor vehicle seat under the influence of external loads.

12. Method for testing a motor vehicle seat under the influence of external loads, whereby
- a test frame (1) is moved along a test path, relative to which the vehicle seat to be tested has to be fixed, and
- a test body (3) is provided, which is rotated during change of movements of the test frame (1) and through which the vehicle seat is loaded, whereby the test body (3) is guided movably and rotatably on the test frame (1) so that the test body (3) is moved together with the test frame (1) along the test path and that the test body (3) is moved by change of movements of the test frame (1) due to the inertial forces acting on the test body (3) relative to the vehicle seat (S), and whereby the test body (3) is guided longitudinally by the means of multiple guiding rails (21), which extend - in respect to the conventional assembly of the vehicle seat (S) in a motor vehicle - along the motor vehicle longitudinal axle (x) and into which at least one guiding element (31) engages longitudinally,
**characterized in that**
guiding rails (21) with different gradients in respect to the motor vehicle longitudinal axle (x) are provided on the test frame (1) and that at least one guiding rail (21) and/or at least one guiding element (31) is rotatably mounted, in order to rotate the test body (3) in respect to the test frame (1).

13. Method according to claim 12, **characterized in that** the test frame (1) is exposed while moving to a positive and/or negative acceleration and that thereby acting forces trigger a relative movement of the test body (3) to the test frame (1) and to a vehicle seat (S) installed stationary in respect to the test frame (1).

14. Method according to claim 12 or 13, **characterized in that** the relative movement of the test body (3) in respect to the test frame (1) corresponds to a longitudinal movement, a rotational movement or a superimposition of the longitudinal movement and a rotational movement.

15. Method according to one of the claims 12 to 14, **characterized by** using a test device according to one of the claims 1 to 10.

## Revendications

1. Dispositif de contrôle d'un siège de véhicule automobile sous l'effet de charges externes avec
- un châssis de base test mobile le long d'une section de contrôle, par rapport auquel le siège de véhicule à contrôler doit être fixé et
- un échantillon pour la charge du siège de véhicule en cas de modifications de mouvement du châssis de base test,
l'échantillon (3) étant guidé de manière mobile et à pouvoir pivoter sur le châssis de base test (1) de telle manière que l'échantillon (3) soit mobile conjointement avec le châssis de base test (1) le long d'une section de contrôle, et l'échantillon (3) soit déplacé en cas de modifications de mouvement du châssis de base test (1) en raison des forces d'inertie agissant à la suite de celles-ci sur l'échantillon (3) de manière relative par rapport à un siège de véhicule (S) fixé selon les dispositions par rapport au châssis de base test (1), et l'échantillon (3) étant guidé de manière mobile longitudinalement à l'aide de plusieurs rails de guidage (21) qui s'étendent, par rapport à l'installation selon les dispositions du siège de véhicule (S) dans un véhicule automobile, le long de l'axe longitudinal du véhicule (x) et dans lesquels s'engage respectivement au moins un élément de guidage (31) de manière mobile longitudinalement,
**caractérisé en ce**
**que** des rails de guidage (21) avec une inclinaison différente par rapport à l'axe longitudinal du véhicule (x) sont prévus sur le châssis de base test (1) et en ce qu'au moins un rail de guidage (21) et/ou au moins un élément de guidage (31) est logé de manière à pouvoir pivoter afin de pouvoir pivoter l'échantillon (3) par rapport au châssis de base test (1).

2. Dispositif selon la revendication 1, **caractérisé en ce que** le siège de véhicule (S) est fixé sur le châssis de base test (1) ou à une unité de construction (T) reliée fixement au châssis de base test (1).

3. Dispositif selon l'une quelconque des revendications précédentes, **caractérisé en ce que** les rails de guidage (21) sont disposés sur le châssis de base test (1).

4. Dispositif selon la revendication 1, **caractérisé en ce que** les glissières de guidage définies par les rails de guidage (21) présentent chacune un composant de glissière le long de l'axe vertical du véhicule (z).

5. Dispositif selon la revendication 1 ou 4, **caractérisé en ce que** les glissières de guidage définies par les rails de guidage (1) présentent chacune un composant de glissière le long de l'axe transversal horizontal du véhicule (y).

6. Dispositif selon l'une quelconque des revendications 1, 4 ou 5, **caractérisé en ce que** l'inclinaison des rails de guidage (21) par rapport à l'axe longitudinal du véhicule (x) peut être réglée.

7. Dispositif selon l'une quelconque des revendications précédentes, **caractérisé en ce que** trois rails de guidage (21) destinés au guidage d'un échantillon (3) sont prévus et **en ce que** la glissière de guidage définie par le rail médian des trois rails de guidage (21) présente un composant plus petit le long de l'axe vertical du véhicule (z) que les glissières de guidage définies par les deux rails de guidage (21) extérieurs.

8. Dispositif selon l'une quelconque des revendications précédentes, **caractérisé en ce que** l'au moins un élément de guidage (31) respectif est prévu sur l'échantillon (3).

9. Dispositif selon la revendication 8, **caractérisé en ce que** l'échantillon (3) est articulé de manière à pouvoir pivoter sur l'au moins un élément de guidage (31) afin de pouvoir pivoter l'échantillon (3) par rapport au châssis de base test (1).

10. Dispositif selon l'une quelconque des revendications précédentes, **caractérisé en ce que** l'échantillon (3) imite, en ce qui concerne sa géométrie, la zone du bassin et/ou la zone du dos d'un occupant de véhicule.

11. Utilisation d'un dispositif selon l'une quelconque des revendications précédentes pour le contrôle d'un siège de véhicule automobile sous l'effet de charges externes.

12. Procédé de contrôle d'un siège de véhicule automobile sous l'effet de charges externes,
- un châssis de base test (1) étant déplacé le long d'une section de contrôle, par rapport auquel le siège de véhicule à contrôler est fixé et
- un échantillon (3) étant prévu, lequel est dévié en cas de modifications de mouvement du châssis de base test (1) et charge par là-même le siège de véhicule, l'échantillon (3) étant guidé de manière mobile et à pouvoir pivoter sur le châssis de base test (1) de telle manière que l'échantillon (3) soit déplacé conjointement avec le châssis de base test (1) le long de la section de contrôle, et l'échantillon (3) soit dévié en cas de modifications de mouvement du châssis de base test (1) à la suite des forces d'inertie agissant à cette occasion sur l'échantillon (3) de manière relative par rapport au siège de véhicule (S), et l'échantillon (3) étant guidé de manière mobile longitudinalement à l'aide de plusieurs rails de guidage (21) qui s'étendent, par rapport à l'installation selon les dispositions du siège de véhicule (S) dans un véhicule automobile, le long de l'axe longitudinal du véhicule (x) et dans lesquels s'engage respectivement au moins un élément de guidage (31) de manière mobile longitudinalement,
**caractérisé en ce**
**que** des rails de guidage (21) avec une inclinaison différente par rapport à l'axe longitudinal du véhicule (x) sont prévus sur le châssis de base test (1) et en ce qu'au moins un rail de guidage (21) et/ou au moins un élément de guidage (31) est logé de manière à pouvoir pivoter afin de pouvoir pivoter l'échantillon (3) par rapport au châssis de base test (1).

13. Procédé selon la revendication 12, **caractérisé en ce que** le châssis de base test (1) est exposé lors du déplacement à une accélération positive et/ou négative et **en ce que** des forces agissant à cette occasion déclenchent un mouvement relatif de l'échantillon (3) par rapport au châssis de base test (1) et par rapport à un siège de véhicule automobile (S) installé fixement par rapport au châssis de base test (1).

14. Procédé selon la revendication 12 ou 13, **caractérisé en ce que** le mouvement relatif de l'échantillon (3) par rapport au châssis de base test (1) correspond à un mouvement longitudinal, à un mouvement de pivotement ou à une superposition d'un mouvement longitudinal et d'un mouvement de pivotement.

15. Procédé selon l'une quelconque des revendications 12 à 14, **caractérisé par** une utilisation d'un dispositif de contrôle selon l'une quelconque des revendications 1 à 10.
